(19) Europäisches Patentamt
European Patent Office
Office européen des brevets

(11) **EP 2 012 438 B1**

(12) **FASCICULE DE BREVET EUROPÉEN**

(45) Date de publication et mention
de la délivrance du brevet:
**20.04.2011   Bulletin 2011/16**

(51) Int Cl.:
***H04B 1/69*** (2011.01)

(21) Numéro de dépôt: **08158178.7**

(22) Date de dépôt: **13.06.2008**

(54) **Procédé et dispositif de corrélation d'un signal, en particulier un signal à bande ultra large.**

Verfahren und Vorrichtung zur Korrelation eines Signals, insbesondere eines Ultrabreitbandsignals

Method and device for correlating a signal, in particular an ultra-wideband signal.

(84) Etats contractants désignés:
**DE FR GB IT**

(30) Priorité: **02.07.2007   FR 0756213**

(43) Date de publication de la demande:
**07.01.2009   Bulletin 2009/02**

(73) Titulaires:
• **STMicroelectronics (Rousset) SAS**
  **13790 Rousset (FR)**
• **Université de Provence (Aix-Marseille 1)**
  **13331 Marseille Cedex 3 (FR)**

(72) Inventeurs:
• **Chalopin, Hervé**
  **13400 AUBAGNE (FR)**
• **Collard-Bovy, Anne**
  **13320 BOUC BEL AIR (FR)**
• **Courmontagne, Philippe**
  **83210, BELGENTIER (FR)**

(74) Mandataire: **Zapalowicz, Francis**
**Casalonga & Partners**
**Bayerstrasse 71/73**
**80335 München (DE)**

(56) Documents cités:
**US-A1- 2004 042 561**

**Description**

L'invention concerne le traitement d'un signal en particulier une corrélation de ce signal, notamment pour tenir compte de la variation de forme d'ondes de ce signal en fonction de la distance d'émission.

L'invention s'applique en particulier mais non exclusivement aux signaux impulsionnels et de façon non limitative aux signaux impulsionnels à bande ultra large modulés.

US 2004/0042561A1 décrit un procédé et un appareil pour la réception de signaux différentiels UWB. Plus précisément, un tel récepteur comprend notamment un corrélateur différentiel couplé à l'entrée du récepteur, un filtre couplé au corrélateur différentiel et un démodulateur numérique couplé au filtre pour retrouver le signal numérique à partir des signaux impulsionnels différentiels reçus.

Un exemple non limitatif d'une modulation d'un signal impulsionnel à bande ultra large (UWB : Ultra Wide Band en langue anglaise) modulé est une modulation numérique par intervalles d'impulsions, bien connu par l'homme du métier sous la dénomination anglo-saxonne « DPIM »: (Digital Pulse Interval Modulation).

Un tel signal modulé véhicule des informations numériques codées et l'invention s'applique également avantageusement mais non limitativement à la transmission et au décodage de telles informations dans le cadre d'un réseau de transmission local sans fil.

La technologie du type à bande ultra large se distingue des technologies à bande étroite et spectre étalé, en ce sens que la largeur de bande du signal de type ultra large bande est typiquement comprise entre environ 25% et environ 100% de la fréquence centrale, ou bien supérieure à 1,5GHz.

Par ailleurs, au lieu de transmettre une porteuse continue modulée avec de l'information ou avec de l'information combinée avec un code d'étalement, ce qui détermine la largeur de bande du signal, la technologie impulsionnelle ultra large bande prévoit la transmission d'une série d'impulsions très étroites. Par exemple, ces impulsions peuvent prendre la forme d'un seul cycle, ou monocycle, ayant une largeur d'impulsion de l'ordre de la nanoseconde. Ces impulsions extrêmement courtes dans le domaine temporel, transformées dans le domaine fréquentiel, conduisent à l'obtention du spectre à bande ultra large caractéristique de la technologie UWB.

Dans la technologie UWB, l'information véhiculée sur le signal peut être codée par exemple par une modulation numérique par intervalles d'impulsions (modulation DPIM). Avec une telle modulation, la valeur de l'espacement entre deux impulsions consécutives du train d'impulsion code la valeur de l'information. En outre, chacun des espacements possibles est un multiple entier d'une durée de base.

Le décodage du train d'impulsions comporte notamment la détection des positions des différentes impulsions de façon à déterminer les valeurs des durées les séparant.

Il est connu que l'amplitude d'un signal diminue dans le cas d'une transmission au fur et à mesure que la distance entre l'émetteur et le récepteur augmente.

Une solution pour remédier à cet inconvénient consiste à adjoindre au récepteur un contrôle automatique de gain permettant d'ajuster l'amplitude du signal reçu de façon à permettre une bonne conversion analogique numérique suivie d'une corrélation qui ne sera pas perturbée par des formes d'ondes d'amplitudes différentes.

Selon un mode de mise en oeuvre et de réalisation, il est proposé un procédé et un dispositif permettant de s'affranchir des problèmes de variations d'amplitudes du signal dues à la distance d'émission et de s'affranchir également d'un contrôleur automatique de gain.

Selon un aspect, il est proposé un procédé de traitement d'un signal, comprenant une réception du signal, un premier traitement sur le signal délivrant un signal échantillonné et un traitement de corrélation sur le signal échantillonné délivrant des valeurs de corrélation.

Selon une caractéristique générale de cet aspect, la forme d'onde du signal variant selon la distance à laquelle ledit signal a été émis, on définit plusieurs signaux de corrélation correspondant respectivement à au moins une partie de plusieurs formes d'ondes échantillonnées du signal respectivement émis à plusieurs distances de valeurs différentes de sorte que la somme des maxima d'intercorrélations respectivement effectuées entre les différents signaux de corrélation et les différentes formes d'ondes échantillonnées soit sensiblement constante sur un intervalle incluant toutes les valeurs desdites distances.

Le traitement de corrélation comporte plusieurs traitements élémentaires de corrélation respectivement effectués avec lesdits signaux de corrélation et délivrant chacun des valeurs initiales de corrélation, ainsi qu'une sommation des valeurs initiales de corrélation homologues respectivement délivrées par lesdits traitements élémentaires de corrélation de façon à obtenir lesdites valeurs de corrélation.

Ainsi, effectuer différents traitements élémentaires de corrélation respectivement associés à différents signaux de corrélation de telle sorte que la somme des corrélations soit sensiblement stable sur un intervalle de distances donné, permet de s'affranchir des variations d'amplitude du signal sur cet intervalle de distance tout en s'affranchissant d'un contrôle automatique de gain ou d'une étape de détection de distance combinée à une sélection du signal de corrélation correspondant à la distance détectée.

Selon un mode de mise en oeuvre dans lequel le signal est un signal impulsionnel, la forme des impulsions du signal variant selon la distance à laquelle ledit signal a été émis, les signaux de corrélation sont des masques de corrélation correspondant respectivement à au moins une partie de plusieurs impulsions échantillonnées du signal respectivement émis à plusieurs distances de valeurs différentes de sorte que la somme des maxima d'intercorrélations respectivement effectuées entre les différents masques de corrélation et les différentes formes d'impulsions échantillonnées soit sensiblement constante sur ledit intervalle.

Ainsi, au lieu de détecter en permanence la distance entre l'émetteur et le récepteur de façon à choisir un masque de corrélation adéquat, il est préférable de définir plusieurs masques de corrélation (deux masques peuvent suffire) correspondant respectivement à au moins une partie de plusieurs impulsions du signal respectivement émis à plusieurs distances de valeurs différentes, ces masques étant définis de sorte que la somme des maxima d'intercorrélations respectivement effectuées entre les différents masques de corrélation et les différentes formes d'impulsions échantillonnées soit sensiblement constante sur un intervalle incluant toutes les valeurs desdites distances.

Bien que le procédé s'applique à tout signal, en particulier tout signal modulé impulsionnel, une application intéressante concerne un signal UWB modulé par une modulation numérique par intervalles d'impulsions (modulation DPIM), dans laquelle l'intervalle théorique entre deux impulsions est un multiple entier d'une durée de base.

Pour un signal UWB qui occupe par exemple une bande de fréquences 6-10GHz, il est nécessaire, compte tenu du critère de Shannon-Nyquist, d'échantillonner ce signal à une fréquence d'échantillonnage à au moins 20GHz et de préférence à 40GHz ce qui nécessite d'avoir recours à un convertisseur analogique numérique dont la fréquence d'échantillonnage est de l'ordre de plusieurs dizaines de GHz, soit un échantillon toutes les 50 picosecondes au moins.

Or, actuellement, la réalisation d'un tel composant en technologie CMOS présente des difficultés.

Aussi, une solution consiste à effectuer une conversion série/parallèle du signal analogique de sorte que le premier traitement délivre des groupes successifs d'échantillons du signal en parallèle. Cette conversion série/parallèle peut être par exemple réalisée avec un banc de convertisseurs analogiques numériques déphasés de la période d'échantillonnage désirée et cadencés à des fréquences plus faibles (par exemple de l'ordre de la centaine ou de quelques centaines de MHz). Le premier traitement délivre ainsi des groupes successifs d'échantillons du signal en parallèle et chaque traitement élémentaire de corrélation est effectué sur les groupes successifs d'échantillons et délivre des blocs successifs de valeurs initiales de corrélation.

De façon à réduire la perte d'informations résultant d'une conversion série/parallèle du signal, en particulier lorsqu'une impulsion se situerait sur une zone de troncature, il est avantageux que le premier traitement comporte outre un traitement initial d'échantillonnage du signal délivrant des blocs successifs de N échantillons en parallèle, un traitement de mémorisation effectuant des mémorisations successives des $M_m$-1 derniers échantillons desdits blocs, $M_m$ étant le nombre d'échantillons (appelés « échantillons de masque ») du masque de corrélation.

Ainsi, chaque groupe courant d'échantillons comporte les $M_m$-1 échantillons mémorisés du bloc précédent suivis des N échantillons du bloc courant.

Selon un mode de mise en oeuvre, le traitement élémentaire de corrélation comporte N corrélations en parallèle effectuées sur chaque groupe de $N+M_m$-1 échantillons avec ledit masque de corrélation et délivre pour chaque groupe d'échantillons un bloc de N valeurs initiales de corrélation.

Selon un autre aspect, il est proposé un dispositif de traitement d'un signal.

Le dispositif comprend

une entrée pour recevoir ledit signal,
des premiers moyens de traitement couplés à ladite entrée et aptes à délivrer un signal échantillonné,
des moyens de traitement de corrélation couplés à la sortie des premiers moyens de traitement et aptes à délivrer des valeurs de corrélation,

Selon une caractéristique générale de cet aspect le dispositif comprend :

des moyens de mémoire stockant plusieurs signaux de corrélation correspondant respectivement à au moins une partie de plusieurs formes d'ondes échantillonnées du signal respectivement émis à plusieurs distances de valeurs différentes de sorte que la somme des maxima d'intercorrélations respectivement effectuées entre les différents signaux de corrélation et les différentes formes d'ondes échantillonnées soit sensiblement constante sur un intervalle incluant toutes les valeurs desdites distances, et
les moyens de traitement de corrélation comportent plusieurs moyens de traitement élémentaires aptes à effectuer respectivement des traitements élémentaires de corrélation avec lesdits signaux de corrélation et à délivrer chacun des valeurs initiales de corrélation, ainsi que des moyens de sommation connectés aux sorties des moyens de traitement élémentaires et aptes à délivrer lesdites valeurs de corrélation.

Selon un mode de réalisation dans lequel le signal est un signal impulsionnel, la forme des impulsions du signal variant selon la distance à laquelle ledit signal a été émis, les signaux de corrélation sont des masques de corrélation correspondant respectivement à au moins une partie de plusieurs impulsions échantillonnées du signal respectivement émis à plusieurs distances de valeurs différentes de sorte que la somme des maxima d'intercorrélations respectivement effectuées entre les différents masques de corrélation et les différentes formes d'impulsions échantillonnées soit sensiblement constante sur ledit intervalle.

Selon un mode de réalisation, dans lequel le signal est un signal à bande ultra large modulé, les premiers moyens de traitement sont aptes à délivrer des groupes successifs d'échantillons du signal en parallèle, chaque moyen de traitement élémentaire est apte à effectuer le traitement élémentaire de corrélation sur les groupes successifs d'échantillons et à délivrer des blocs successifs de valeurs initiales de corrélation.

Selon un mode de réalisation, le signal est un signal à bande ultra large modulé par une modulation numérique par intervalles d'impulsions.

Selon un mode de réalisation, chaque masque de corrélation comporte $M_m$ échantillons de masque, les premiers moyens de traitement comportent

des moyens d'échantillonnage délivrant des blocs successifs de N échantillons en parallèle,

une mémoire apte à stocker successivement les $M_m$-1 derniers échantillons desdits blocs.

Chaque groupe courant d'échantillons apte à être délivré par les premiers moyens de traitement comporte alors avantageusement les $M_m$-1 échantillons mémorisés du bloc précédent suivis des N échantillons du bloc courant.

Chaque moyen de traitement élémentaire, est par exemple apte à effectuer N corrélations en parallèle sur chaque groupe de $N+M_m$-1 échantillons avec ledit masque de corrélation et à délivrer pour chaque groupe d'échantillons un bloc de N valeurs initiales de corrélation.

Le dispositif comprend par exemple un processeur de traitement de signal incorporant les moyens de traitement de corrélation.

Selon un autre aspect, il est également proposé un récepteur d'un système de transmission sans fil, par exemple un récepteur UWB, comprenant un dispositif de traitement tel que défini ci-avant.

D'autres avantages et caractéristiques de l'invention apparaîtront à l'examen de la description détaillée de modes de mises en oeuvre et de réalisations, nullement limitatifs, et des dessins annexés sur lesquels :

- la figure 1 représente schématiquement un émetteur et un récepteur d'un système de communication sans fil,
- la figure 2 illustre une modulation DPIM,
- la figure 3 illustre schématiquement les principales étapes d'un mode de mise en oeuvre d'un procédé de traitement d'un signal,
- la figure 4 illustre schématiquement un mode de réalisation d'un récepteur de la figure 1, et
- les figures 5 à 14 illustrent plus en détails mais toujours de façon schématique différents aspects du procédé et du dispositif illustrés sur les figures 3 et 4 respectivement,

On va maintenant décrire en se référant aux figures, un exemple de mise en oeuvre et de réalisation appliqué à un signal UWB modulé par une modulation DPIM, bien que l'invention ne soit pas limitée à ce type d'application particulière mais concerne de façon plus générale tout signal sur lequel il est envisagé d'effectuer un traitement de corrélation, par exemple pour détecter le contenu de ce signal.

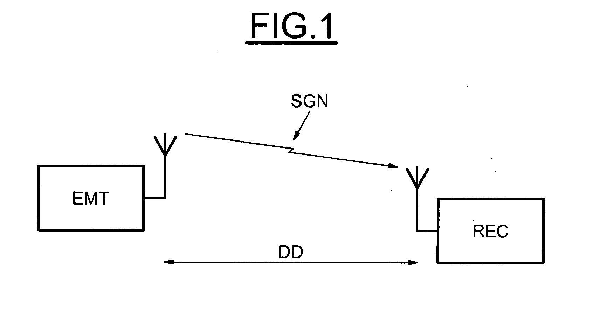

Sur la figure 1, la référence EMT désigne un émetteur pour un système de communication sans fil transmettant à un récepteur REC un signal SGN du type UWB modulé par une modulation DPIM.

Par ailleurs, l'émetteur et le récepteur sont séparés d'une distance DD.

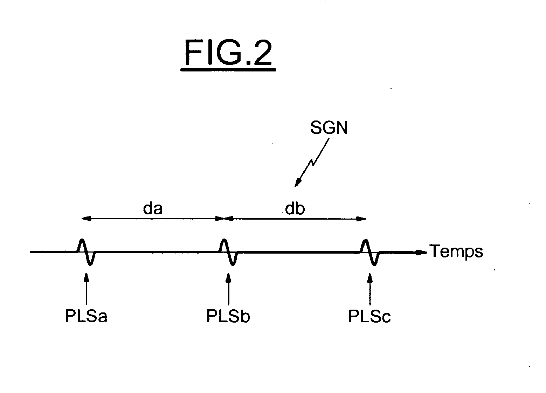

Sur la figure 2, on voit que le signal SGN comporte un train d'impulsions dont seulement trois, référencées PLSa, PLSb, PLSc, ont été représentées à des fins de simplification.

La largeur d'une telle impulsion est de l'ordre de 1 à 2 nanosecondes.

Le signal véhicule des informations codées.

La valeur de l'intervalle (da, db) entre deux impulsions code la valeur d'une information.

Ainsi, p informations sont codées à l'aide de p+1 impulsions.

Par ailleurs, l'intervalle théorique entre deux impulsions est un multiple entier d'une durée de base $T_{mod}$.

Cette durée de base $T_{mod}$ est par exemple égale à 400 picosecondes.

Et les différents intervalles temporels $d_i$ possibles sont égaux à $(n+i) T_{mod}$.

Ainsi, à titre d'exemple, si les différentes informations peuvent prendre les valeurs 0, 1, 2 ou 3 c'est-à-dire en binaire 00, 01, 10, 11, alors une impulsion séparée de la précédente d'un intervalle $d_0$ égal à $3T_{mod}$ correspondra à une valeur 0 pour l'information.

Un intervalle $d_1$ égal à $4T_{mod}$ correspondra à une valeur 1 pour l'information.

Un intervalle $d_2$ égal à $5T_{mod}$ correspondra à une valeur 2 pour l'information et un intervalle $d_3$ égal à $6T_{mod}$ correspondra à une valeur 3 pour l'information.

Les impulsions PLS possèdent des caractéristiques d'une impulsion du type à bande ultra large en ce sens que le rapport de la largeur de bande de l'impulsion à mi puissance sur la fréquence centrale est supérieur à un quart ou bien que la largeur de bande à mi-puissance est supérieure à 1.5GHz. A titre indicatif, la fréquence centrale d'une impulsion peut être égale à plusieurs GHz.

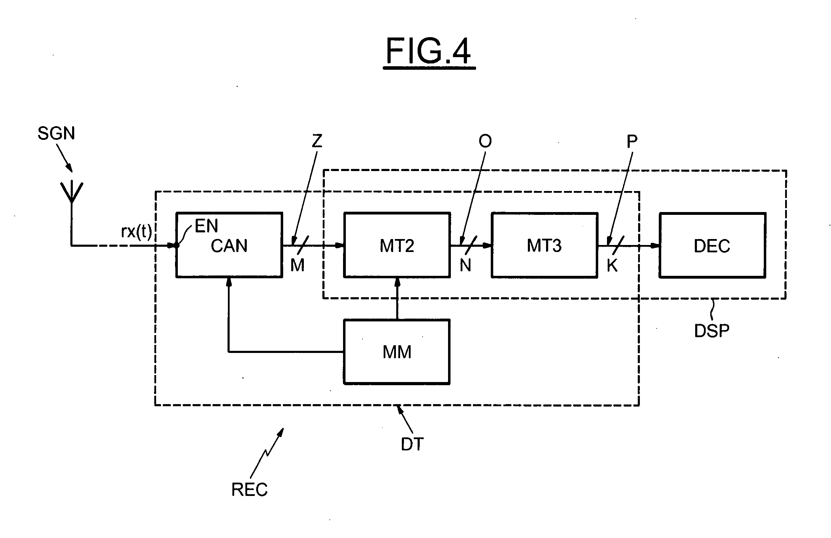

Comme illustré sur la figure 4, le récepteur REC comporte une antenne recevant le signal SGN après transmission sur un canal de transmission qui peut être multi-trajets.

Après passage dans l'antenne et à travers les différents éléments classiques d'une chaîne de réception analogique, comme par exemple un amplificateur faible bruit, le signal impulsionnel temporel rx, résultant du signal SGN, est délivré à l'entrée EN du dispositif de traitement DT. Cette entrée EN est en fait l'entrée de premiers moyens de traitement CAN.

Le signal rx est également un signal impulsionnel. Cependant, la forme des impulsions formant ce signal rx peut être différente de la forme des impulsions du signal SGN en fonction des caractéristiques des moyens de réception, notamment de l'antenne, et de la perturbation induite par le canal de transmission (bruit ambiant et multitrajets).

En d'autres termes chaque impulsion du signal rx est en fait la réponse théorique du système à la réception d'une impulsion du signal SGN et cette réponse théorique peut varier en fonction des caractéristiques des moyens de réception.

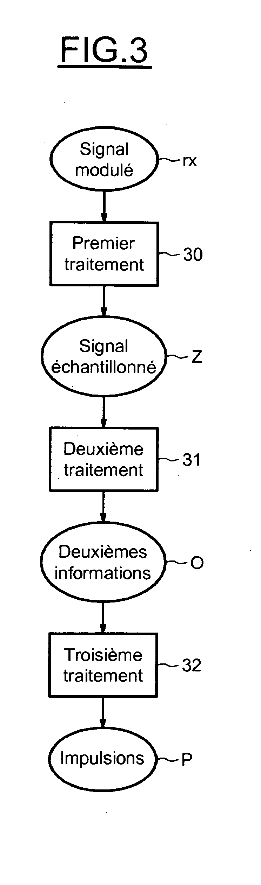

Comme illustré sur la figure 3, le signal modulé rx subit un premier traitement 30 délivrant un signal échantillonné Z.

Un deuxième traitement 31 est effectué sur le signal échantillonné Z pour délivrer des deuxièmes informations O sur lesquelles est effectué un troisième traitement 32 permettant de détecter les impulsions P.

Le deuxième traitement 31 comporte, comme on le verra plus en détail ci-après, un traitement de corrélation incluant plusieurs traitements élémentaires de corrélation avec plusieurs masques de corrélation correspondant à la forme d'au moins une partie de plusieurs impulsions échantillonnées du signal émis à des distances DD différentes.

Matériellement, les moyens permettant la mise en oeuvre de ce procédé sont incorporés au sein d'un dispositif de traitement DT comme par exemple celui illustré schématiquement sur la figure 4.

Les premiers moyens de traitement CAN sont aptes à effectuer le premier traitement.

Un processeur de traitement de signal DSP peut incorporer de façon logicielle les deuxièmes moyens de traitement MT2 et les troisièmes moyens de traitement MT3 aptes respectivement à effectuer les deuxièmes et troisièmes traitements 31 et 32.

Un module de décodage DEC, incorporé également au sein du processeur DSP permet le décodage des informations véhiculées par le signal SGN compte tenu des valeurs des intervalles séparant les différentes impulsions détectées.

Le dispositif de traitement DT comporte en outre une mémoire MM capable de stocker les différents masques de corrélation.

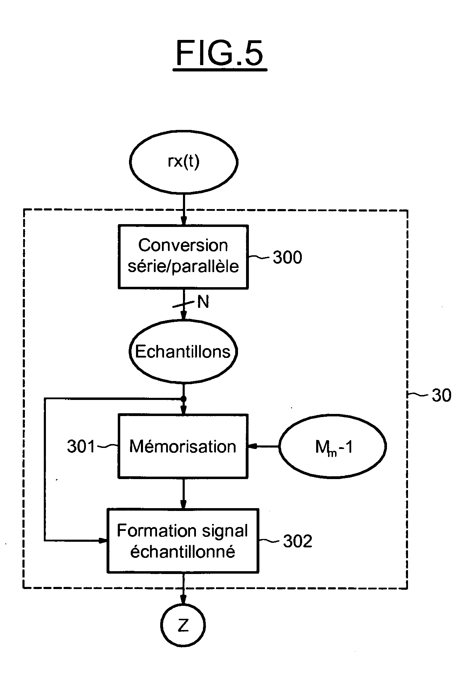

Un exemple de premier traitement 30 est illustré plus particulièrement sur la figure 5.

Celui-ci comporte une conversion série/parallèle 300 du signal rx, qui s'apparente en fait à un traitement initial d'échantillonnage délivrant des blocs successifs d'échantillons en parallèle, par exemple des blocs successifs de N échantillons.

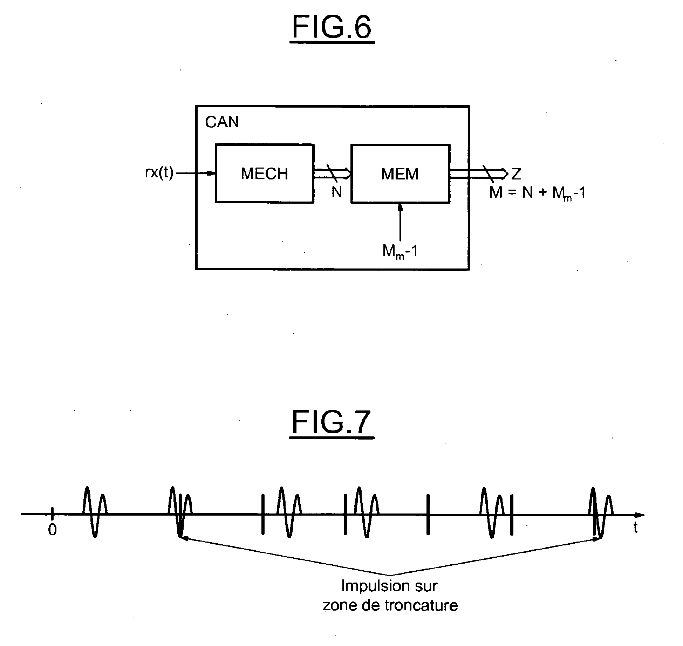

Cela étant, séparer un signal en plusieurs blocs parallèles, ce qui revient à une conversion série/parallèle, peut conduire à une perte d'information dans le cas où une impulsion du signal se situerait au lieu de séparation ou zone de troncature comme illustré sur la figure 7.

Aussi, est-il prévu un traitement de mémorisation 301 effectuant des mémorisations successives des $M_m-1$ derniers échantillons des blocs d'échantillon. $M_m-1$ représente ici la taille en nombre d'échantillons du masque de corrélation qui va être utilisé, diminuée d'un échantillon.

La formation 302 du signal échantillonné Z comporte alors la formation de groupes successifs de $N+M_m-1$ échantillons.

Plus précisément, un groupe courant d'échantillons du signal Z comporte les $M_m-1$ échantillons mémorisés du bloc précédent suivi des N échantillons du bloc courant délivré à l'issue du traitement initial d'échantillonnage 300.

Ainsi, le premier traitement 30 est globalement une conversion série/parallèle qui délivre un signal échantillonné Z formé d'une succession de groupes d'échantillons, chaque groupe d'échantillons comportant ici $N+M_m-1$ échantillons.

Les échantillons peuvent être codés sur un certain nombre de bits dépendant de la quantification.

Cela étant, à titre d'exemple, on décrira ici le cas d'une quantification sur deux bits.

Ainsi chaque échantillon prend des valeurs parmi les valeurs -1, 0 et 1. Leurs valeurs binaires respectives sont 11, 00, 01. Et, dans ce cas précis, le bit de poids fort représente le signe de l'échantillon.

Matériellement, les premiers moyens de traitement CAN peuvent être réalisés comme illustré sur la figure 6.

Plus précisément, des moyens d'échantillonnage MECH délivrent les blocs successifs de N échantillons en parallèle et une mémoire MEM est prévue pour stocker temporairement les $M_m-1$ derniers échantillons de chaque bloc en vue de former chaque groupe de M échantillons, M étant égal à $N+M_m-1$.

Lorsque la fréquence centrale des impulsions du signal rx est de l'ordre de plusieurs GHz, la fréquence respective d'échantillonnage du signal est préférentiellement de l'ordre de plusieurs dizaines de GHz. Une solution permettant la réalisation de tels moyens en technologie CMOS peut consister en l'utilisation d'un banc de N convertisseurs analogiques numériques, cadencés chacun à une fréquence Fe plus faible, par exemple de l'ordre de la centaine de MHz, et mutuellement déphasés d'un décalage temporel égal à 1/N.Fe.

Ainsi, on a une fréquence effective d'échantillonnage égale à N.Fe. A titre indicatif, si N est égal à 256, et si chaque convertisseur analogique numérique échantillonne à Fe = 156,25 MHz, on obtient un échantillonnage multiphasé avec une fréquence effective d'échantillonnage N.Fe égale à 40GHz.

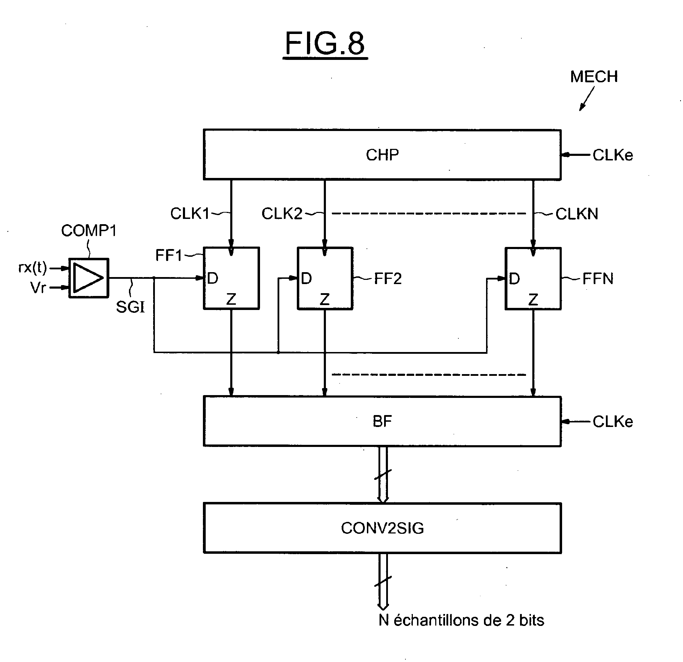

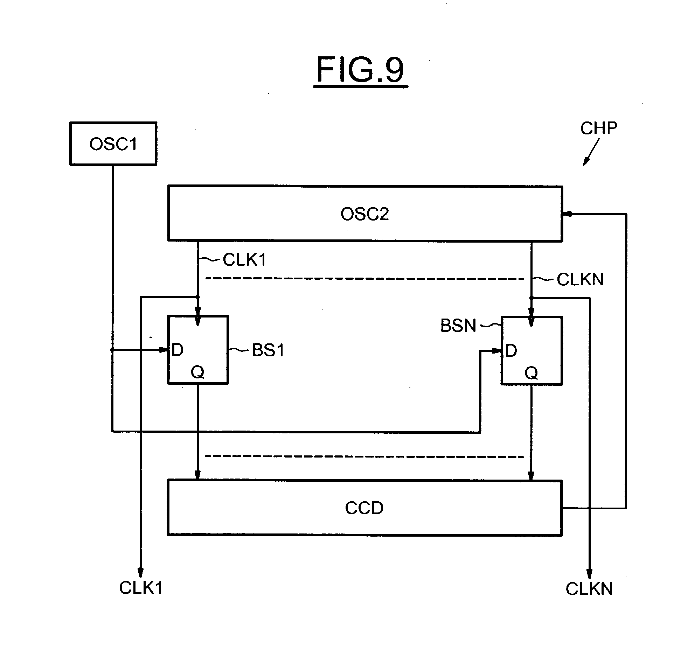

Une autre solution possible est du type de celle illustrée sur les figures 8 et 9.

Elle prévoit l'utilisation de bascules D.

Le signal rx (t) est délivré dans un moyen de comparaison COMP1 (figure 8) pour être comparé à une tension de référence Vr, par exemple la tension nulle, de façon à délivrer un signal SGI susceptible de prendre trois états logiques « +1 », « 0 », « -1 » en fonction du niveau du signal rx par rapport à la valeur de référence Vr.

Les moyens d'échantillonnage MECH comportent un circuit d'horloge programmable CHP recevant un signal d'horloge de base CLKe ayant la fréquence Fe et délivrant N signaux d'horloge élémentaires CLK1-CLKN ayant tous la même fréquence Fe mais mutuellement temporellement décalés de 1/N.Fe.

Les moyens MECH comportent également N bascules D, respectivement référencées FF1-FFN. Ces bascules sont respectivement commandées par les N signaux d'horloge élémentaires CLK1-CLKN et elles reçoivent toutes en entrée le signal SGI.

Au rythme des fronts montants successifs des différents signaux d'horloge élémentaires CLK1-CLKN, le signal SGI va donc être échantillonné et les N échantillons successifs vont être stockés dans un registre de sortie BF commandé par le signal d'horloge de base CLKe. A chaque front montant de ce signal d'horloge de base CLKe (les fronts montants étant espacés d'une durée Te représentant la période de ce signal d'horloge de base), les N échantillons vont être délivrés en parallèle.

En pratique, le circuit d'horloge programmable CHP peut être composé d'une horloge, par exemple un quartz, et d'un certain nombre d'éléments de retard montés en série à la sortie de l'horloge. A cet égard, l'homme du métier pourra éventuellement se référer à la demande de brevet européen n° 0 843 418.

L'une des difficultés de cet échantillonnage à très haute fréquence, réside dans le fait qu'il convient de délivrer les signaux d'horloge élémentaires avec une précision (« jitter » en langue anglaise) très faible, par exemple de l'ordre de quelques picosecondes. C'est la raison pour laquelle il est alors avantageux que le circuit d'horloge programmable CHP comprenne une boucle numérique à verrouillage de phase comportant (figure 9) par exemple un oscillateur programmable en anneau OSC2, délivrant les N signaux d'horloge élémentaires CLK1-CLKN. Cet oscillateur en anneau est commandé à partir d'un circuit de commande CCD, recevant les sorties respectives de N bascules BS1-BSN. Ces N bascules sont respectivement commandées par les N signaux d'horloge élémentaires CLK1-CLKN et reçoivent sur leur entrée D le signal d'horloge de base CLKe issu par exemple d'un oscillateur classique à quartz OSC1.

L'homme du métier pourra, à cet égard, se référer, si nécessaire, au brevet américain n° 6 208 182, en ce qui concerne notamment la commande de l'oscillateur en anneau. On en rappelle ici cependant les principes généraux. Le circuit de commande CCD comporte des moyens pour comparer des échantillons deux à deux, de façon à déterminer si une transition d'état s'est produite dans un intervalle temporel séparant les deux échantillons, cette comparaison étant effectuée sur au moins deux cycles, consécutifs ou non, de l'oscillateur en anneau. Cette comparaison est effectuée de sorte que :

- si, durant le second cycle, une transition d'état comparable est détectée dans le même intervalle, la commande de l'oscillateur en anneau n'est pas modifiée,
- si, durant le second cycle, une transition d'état comparable est détectée dans un intervalle ultérieur, la période de l'oscillateur en anneau est diminuée, et
- si, durant le second cycle, une transition d'état comparable est détectée dans un intervalle antérieur, la période de l'oscillateur en anneau est augmentée.

Bien entendu, le circuit d'horloge programmable CHP qui a été décrit en référence aux figures 8 et 9 pourrait être également utilisé pour générer les différents signaux de cadencement du banc de N convertisseurs analogiques numériques évoqués plus haut dans la solution précédente.

Les moyens d'échantillonnage MECH comportent également dans le cas présent, N blocs CONV2SIG de structure classique convertissant chacun l'échantillon reçu en entrée en un échantillon de deux bits (un bit de signe et un bit de données).

Plus précisément, si l'échantillon reçu en entrée a la valeur 0, les deux bits de signe de donnée valent 0.

Si la valeur de l'échantillon d'entrée est +1, alors le bit de signe est égal à 0 et le bit de données est égal à 1 tandis que si l'échantillon reçu en entrée a la valeur -1, les deux bits de signe et de donnée sont égaux à 1.

La sortie des moyens d'échantillonnage MECH délivre donc dans l'exemple décrit ici des groupes successifs de N échantillons de deux bits.

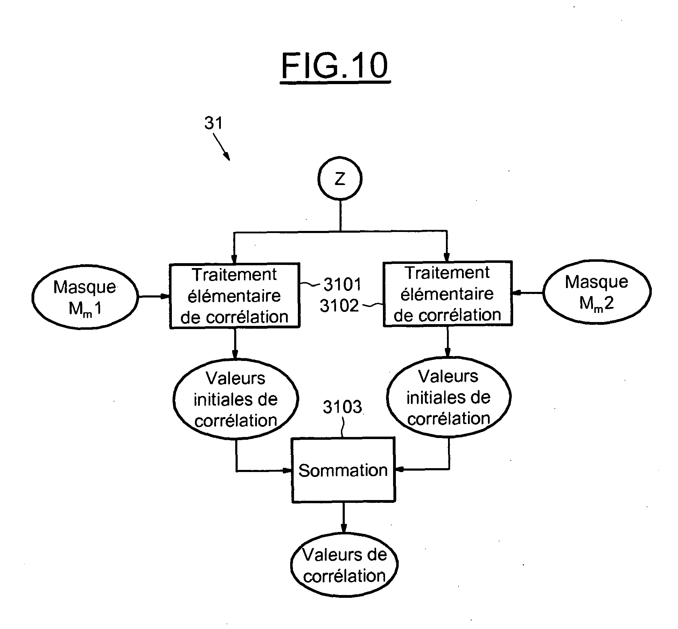

Si l'on se réfère maintenant plus particulièrement à la figure 10, on voit que le deuxième traitement 31 effectué sur le signal échantillonné Z comporte plusieurs traitements élémentaires de corrélation (ici 2 référencés 3101 et 3102) respectivement effectués avec plusieurs masques différents de corrélation Mm1 et Mm2.

On reviendra plus en détail ci-après sur la définition de ces masques de corrélation.

Chaque traitement élémentaire de corrélation délivre des valeurs initiales de corrélation.

Les valeurs initiales de corrélation homologues délivrées par les traitements élémentaires de corrélation vont ensuite être sommées (étape 3103) de façon à délivrer les valeurs de corrélation.

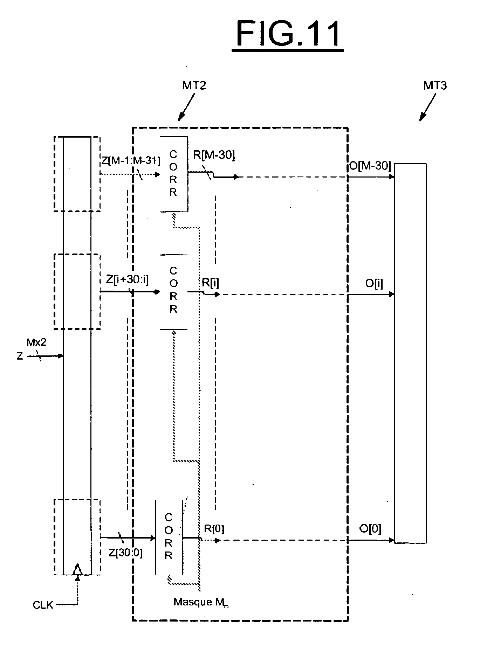

On se réfère maintenant plus particulièrement à la figure 11 pour décrire un traitement élémentaire de corrélation effectué au sein des deuxièmes moyens MT2, étant bien entendu que tous les moyens élémentaires de corrélation sont analogues.

Comme on le voit plus particulièrement sur la figure 11, le traitement élémentaire de corrélation 3100 comporte ici N corrélations en parallèle effectuées respectivement par N corrélateurs deux bits CORR.

Ces N corrélations en parallèle sont effectuées sur chaque groupe de $N+M_m-1$ échantillons avec le masque de corrélation $M_m$.

Comme illustré sur la figure 11, chaque corrélateur effectue la corrélation entre des groupes Z[i+30 :i] de 31 échantillons et 31 échantillons de masque également codés sur 2 bits. Le nombre 31 correspond à la taille du masque de corrélation.

On obtient alors N valeurs de corrélation R[0]-R[M-30] c'est-à-dire R[0]-R[255](N=256).

Les valeurs de corrélation peuvent prendre toute valeur entière comprise entre 0 et la taille du masque, c'est-à-dire ici 31, et sont par conséquent codées ici sur 5 bits.

Chaque corrélation effectuée par le corrélateur deux bits CORR peut être obtenue classiquement par une suite de multiplication bit à bit. On peut également utiliser en variante une opération C corrélant deux valeurs x et y codées sur deux bits et définie par la formule ci-dessous.

$$C(x,y) = \overline{\overline{x_1 \oplus y_1} \bullet \overline{x_0 \oplus y_0}}, \text{ où } x = \{x_1, x_0\} \text{ et } y = \{y_1, y_0\}$$

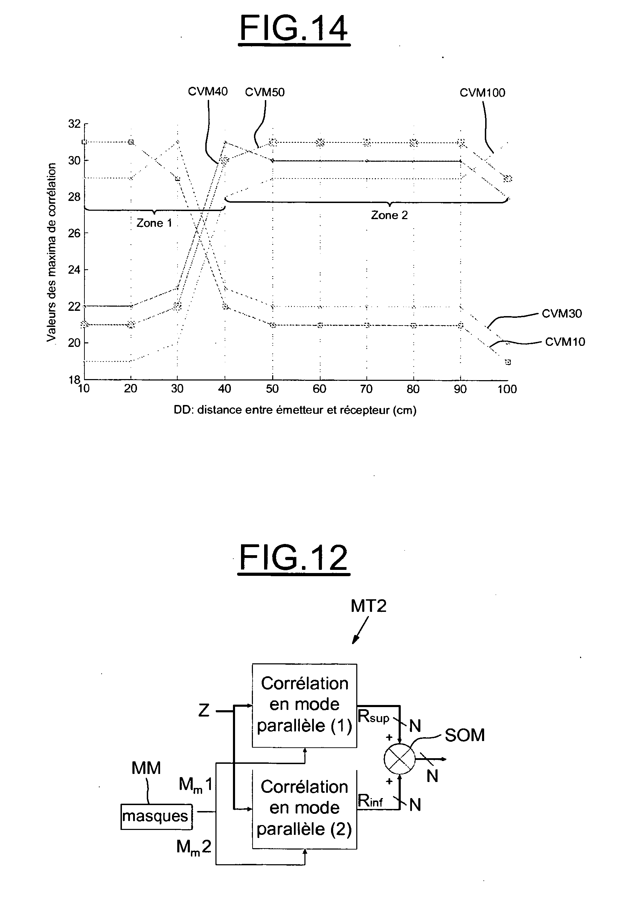

Matériellement, les deuxièmes moyens de traitement MT2 sont par exemple ceux illustrés sur la figure 12. La mémoire MM stocke les deux masques préalablement définis. Et les moyens de corrélation, réalisés de façon logicielle au sein du processeur DSP, effectuent en parallèle les deux traitements élémentaires de corrélation avec les deux masques $M_{m1}$ et $M_{m2}$. Les résultats de corrélation $R_{sup}$ et $R_{inf}$ sont sommés en un sommateur SOM pour donner les valeurs de corrélation R.

Les N valeurs de corrélation R[i] sont ensuite de préférence seuillées dans des moyens de seuillage formés ici par exemple de N comparateurs utilisant tous une même valeur de seuil.

Par exemple, on peut choisir une valeur de seuil VS égale à 70% du maximum de corrélation.

Les moyens de seuillage délivrent alors des groupes successifs de N valeurs seuillées O[i] (figure 11) qui forment ici les N deuxièmes informations.

Et, pour i variant de 0 à N-1, O[i] est égal à 1 si R[i] est supérieur à VS et égal à 0 sinon.

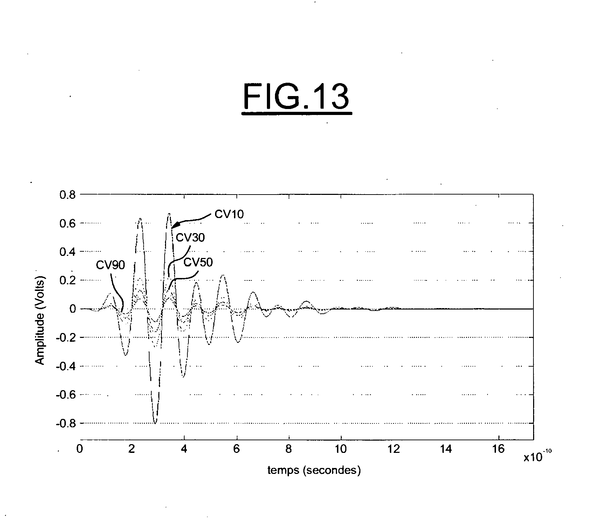

On va maintenant décrire, en se référant plus particulièrement aux figures 13 et 14, la définition et la signification des différents masques de corrélation utilisés par les différents moyens de traitement élémentaire de corrélation.

Il est connu que l'amplitude d'un signal diminue dans le canal de transmission au fur et à mesure que la distance entre l'émetteur et le récepteur augmente. Une solution pour remédier à cet inconvénient consiste à adjoindre au dispositif un contrôle automatique de gain permettant de conserver pour toute distance une amplitude compatible avec une bonne conversion analogique numérique et avec une corrélation classique.

Cela étant, une autre solution, permettant de s'affranchir des problèmes de variation d'amplitude du signal dues à la distance d'émission et de s'affranchir également d'un contrôleur automatique de gain est illustré à titre d'exemple sur les figures 13 et 14.

Sur la figure 13, on a représenté différentes formes d'impulsion reçues au niveau du récepteur REC, pour des distances d'émission DD (figure 1) variant de 10cm à 100cm.

On observe effectivement une diminution de l'amplitude de ces différentes impulsions.

Ainsi, la courbe CV10 représente la forme d'une impulsion pour une distance DD de 10cm.

La courbe CV30 représente la forme d'une impulsion pour une distance DD égale à 30cm.

La courbe CV50 représente la forme d'une impulsion pour une distance DD égale à 50 cm et la courbe CV90 représente la forme d'une impulsion pour une distance DD égale à 90cm.

On définit alors pour chacune de ces formes d'impulsions, un masque de corrélation correspondant à au moins une partie de la forme correspondante d'impulsion échantillonnée et on effectue toutes les intercorrélations entre les différents masques de corrélation et les différentes formes d'impulsions échantillonnées.

Puis, on examine l'évolution des maxima de ces intercorrélations. Ces évolutions sont représentées sur la figure 14.

Ainsi, la courbe CVM10 représente l'évolution des maxima d'intercorrélation en utilisant des masques associés à une distance DD égale à 10cm et à une distance DD égale à 20cm.

La courbe CVM30 illustre l'évolution pour un masque associé à une distance DD égale à 30cm.

La courbe CVM40 correspond à l'évolution pour un masque associé à la distance DD égale à 40cm.

La courbe CVM50 représente l'évolution pour des masques associés aux distances 50, 60, 70, 80 et 90cm.

La courbe CVM100 représente l'évolution pour un masque associé à la distance DD égale à 1m.

Toutes ces évolutions mettent en évidence dans l'exemple particulier qui est décrit, deux groupes d'impulsion. Ces deux zones correspondent respectivement à des distances inférieures à 40cm et à des distances supérieures ou égales à 40cm.

Cela étant, on voit qu'il n'est a priori pas possible de déterminer un masque de corrélation valable pour toute distance comprise entre 10 et 40cm, ainsi qu'un autre masque de corrélation valable pour toute distance comprise entre 40 et 100cm.

Par contre, il est envisageable de définir deux masques dont la somme des maxima des intercorrélations soit sensiblement constante sur un intervalle, incluant toutes les valeurs des distances différentes considérées, ici les distances comprises entre 0 et 1 mètre.

Et, comme illustré sur la figure 10, le traitement de corrélation 31 va comporter deux traitements élémentaires de corrélation 3101 et 3102 effectués respectivement avec les deux masques $M_{m1}$ et $M_{m2}$ sélectionnés.

A titre d'exemple, on pourra choisir comme premier masque $M_{m1}$ le masque associé à la distance DD = 20 cm et comme masque $M_{m2}$ le masque associé à la distance 70cm.

Une telle solution peut se généraliser à A masques et A traitements élémentaires de corrélation, avec A supérieur à 2, si la distance et la forme d'onde le requièrent.

Les traitements élémentaires de corrélation multiples peuvent être effectués simultanément ou l'un après l'autre après un temps de latence.

La détection d'impulsions va être effectuée dans les moyens MT3 sur les deuxièmes informations O. Cette détection peut être effectuée par tout moyen classique, par exemple une analyse de toutes les valeurs de corrélation.

En variante, on peut également utiliser une détection par paquets telle que celle décrite dans la demande de brevet français déposée le même jour que la présente demande aux noms des demandeurs et ayant pour titre « procédé et dispositif de traitement d'un train d'impulsions d'un signal modulé, en particulier un signal à bande ultra large modulé par une modulation numérique par intervalles d'impulsions ».

L'invention n'est pas limitée au mode de réalisation et de mise en oeuvre qui viennent d'être décrit mais en embrasse toutes les variantes.

Ainsi, non seulement le fait d'utiliser une corrélation multiple avec différents signaux de corrélation (par exemple des masques de corrélation) n'est pas limité à un signal impulsionnel mais s'applique à tout signal nécessitant une corrélation, mais encore il n'est pas nécessaire si l'application ne le requiert pas, d'effectuer une conversion série/parallèle du signal avant corrélation. En effet, l'invention s'applique également à un échantillonnage classique série du signal.

**Revendications**

1. Procédé de traitement d'un signal, comprenant une réception du signal, un premier traitement sur le signal délivrant un signal échantillonné et un traitement de corrélation sur le signal échantillonné délivrant des valeurs de corrélation, **caractérisé par le fait que** la forme d'onde du signal variant selon la distance (DD) à laquelle ledit signal a été émis, on définit plusieurs signaux de corrélation correspondant respectivement à au moins une partie de plusieurs formes d'ondes échantillonnées du signal respectivement émis à plusieurs distances de valeurs différentes de sorte que la somme des maxima d'intercorrélations respectivement effectuées entre les différents signaux de corrélation et les différentes formes d'ondes échantillonnées soit sensiblement constante sur un intervalle incluant toutes les valeurs desdites distances, et **par le fait que** le traitement de corrélation comporte plusieurs traitements élémentaires de corrélation (3101, 3102) respectivement effectués avec lesdits signaux de corrélation ($M_m1$, $M_m2$) et délivrant chacun des valeurs initiales de corrélation, ainsi qu'une sommation (3103) des valeurs initiales de corrélation homologues respectivement délivrées par lesdits traitements élémentaires de corrélation de façon à obtenir lesdites valeurs de corrélation (R).

2. Procédé selon la revendication 1, dans lequel le signal est un signal impulsionnel, la forme des impulsions du signal variant selon la distance (DD) à laquelle ledit signal a été émis, dans lequel les signaux de corrélation sont des masques de corrélation correspondant respectivement à au moins une partie de plusieurs impulsions échantillonnées du signal respectivement émis à plusieurs distances de valeurs différentes de sorte que la somme des maxima d'intercorrélations respectivement effectuées entre les différents masques de corrélation et les différentes formes d'impulsions échantillonnées soit sensiblement constante sur ledit intervalle.

**3.** Procédé selon la revendication 2, dans lequel le signal est un signal à bande ultra large modulé et le premier traitement délivre des groupes successifs d'échantillons (Z) du signal en parallèle et chaque traitement élémentaire de corrélation est effectué sur les groupes successifs d'échantillons et délivre des blocs successifs de valeurs initiales de corrélation.

**4.** Procédé selon la revendication 3, dans lequel le signal est un signal à bande ultra large modulé par une modulation numérique par intervalles d'impulsions.

**5.** Procédé selon la revendication 2, 3 ou 4, dans lequel chaque masque de corrélation comporte $M_m$ échantillons de masque, le premier traitement (31) comporte un traitement initial d'échantillonnage (300) du signal délivrant des blocs successifs de N échantillons en parallèle et un traitement de mémorisation (301) effectuant des mémorisations successives des $M_m$-1 derniers échantillons desdits blocs, chaque groupe courant d'échantillons comportant les $M_m$-1 échantillons mémorisés du bloc précédent suivis des N échantillons du bloc courant.

**6.** Procédé selon la revendication 5, dans lequel le traitement élémentaire de corrélation (3100) comporte N corrélations en parallèle effectuées sur chaque groupe de $N+M_m$-1 échantillons avec ledit masque de corrélation et délivrant pour chaque groupe d'échantillons un bloc de N valeurs initiales de corrélation.

**7.** Dispositif de traitement d'un signal, comprenant une entrée (EN) pour recevoir ledit signal (rx), des premiers moyens de traitement (CAN) couplés à ladite entrée et aptes à délivrer un signal échantillonné (7), des moyens de traitement de corrélation couplés à la sortie des premiers moyens de traitement et aptes à délivrer des valeurs de corrélation, **caractérisé par le fait qu'**il comprend des moyens de mémoire (MM) stockant plusieurs signaux de corrélation correspondant respectivement à au moins une partie de plusieurs formes d'ondes échantillonnées du signal respectivement émis à plusieurs distances de valeurs différentes de sorte que la somme des maxima d'intercorrélations respectivement effectuées entre les différents signaux de corrélation et les différentes formes d'ondes échantillonnées soit sensiblement constante sur un intervalle incluant toutes les valeurs desdites distances, et les moyens de traitement de corrélation comportent plusieurs moyens de traitement élémentaires aptes à effectuer respectivement des traitements élémentaires de corrélation avec lesdits signaux de corrélation et à délivrer chacun des valeurs initiales de corrélation, ainsi que des moyens de sommation (SOM) connectés aux sorties des moyens de traitement élémentaires et aptes à délivrer lesdites valeurs de corrélation (R).

**8.** Dispositif selon la revendication 7, dans lequel le signal est un signal impulsionnel, la forme des impulsions du signal variant selon la distance (DD) à laquelle ledit signal a été émis, dans lequel les signaux de corrélation sont des masques de corrélation correspondant respectivement à au moins une partie de plusieurs impulsions échantillonnées du signal respectivement émis à plusieurs distances de valeurs différentes de sorte que la somme des maxima d'intercorrélations respectivement effectuées entre les différents masques de corrélation et les différentes formes d'impulsions échantillonnées soit sensiblement constante sur ledit intervalle.

**9.** Dispositif selon la revendication 8, dans lequel le signal est un signal à bande ultra large modulé, dans lequel les premiers moyens de traitement (CAN) sont aptes à délivrer des groupes successifs d'échantillons (Z) du signal en parallèle, chaque moyen de traitement élémentaire est apte à effectuer le traitement élémentaire de corrélation sur les groupes successifs d'échantillons et à délivrer des blocs successifs de valeurs initiales de corrélation.

**10.** Dispositif selon la revendication 9, dans lequel le signal est un signal à bande ultra large modulé par une modulation numérique par intervalles d'impulsions.

**11.** Dispositif selon la revendication 8, 9 ou 10, dans lequel chaque masque de corrélation comporte $M_m$ échantillons de masque, les premiers moyens de traitement comportent des moyens d'échantillonnage (MECH) délivrant des blocs successifs de N échantillons en parallèle, une mémoire (MEM) apte à stocker successivement les $M_m$-1 derniers échantillons desdits blocs, chaque groupe courant d'échantillons apte à être délivré par les premiers moyens de traitement comportant les $M_m$-1 échantillons mémorisés du bloc précédent suivis des N échantillons du bloc courant.

**12.** Dispositif selon la revendication 11, dans lequel chaque moyen de traitement élémentaire (CORR) est apte à effectuer N corrélations en parallèle sur chaque groupe de N + $M_m$-1 échantillons avec le masque de corrélation correspondant et à délivrer pour chaque groupe d'échantillons un bloc de N valeurs initiales de corrélation.

**13.** Dispositif selon l'une des revendications 7 à 12, comprenant un processeur de traitement de signal (DSP) incorporant les moyens de traitement de corrélation.

**14.** Récepteur, comprenant un dispositif selon l'une des revendications 7 à 13.

**Claims**

**1.** Method of processing a signal, comprising a reception of the signal, a first processing on the signal delivering a sampled signal and a correlation processing on the sampled signal delivering correlation values, **characterized in that** the waveform of the signal varying according to the distance (DD) to which said signal was emitted, several correlation signals corresponding respectively to at least part of several sampled waveforms of the signal respectively emitted at several distances of different values so that the sum of the maxima of intercorrelations performed respectively between the various correlation signals and the various sampled waveforms is substantially constant over an interval including all the values of said distances, are defined, and by the fact that the correlation processing comprises several elementary correlation processings (3101, 3102) respectively performed with said correlation signals ($M_m1$, $M_m2$) and each delivering initial correlation values, as well as a summation (3103) of the homologous initial correlation values respectively delivered by said elementary correlation processings so as to obtain said correlation values (R).

**2.** Method according to Claim 1, in which the signal is a pulse signal, the shape of the pulses of the signal varying according to the distance (DD) at which said signal was emitted, in which the correlation signals are correlation masks corresponding respectively to at least part of several sampled pulses of the signal respectively emitted at several distances of different values are moreover defined so that the sum of the maxima of intercorrelations performed respectively between the various correlation masks and the various shapes of sampled pulses is substantially constant over said interval.

**3.** Method according to Claim 2, in which the signal is a modulated ultra wideband signal and the first processing delivers successive groups of samples (Z) of the signal in parallel, and each elementary correlation processing is performed on the successive groups of samples and delivers successive blocks of initial correlation values.

**4.** Method according to Claim 3, in which the signal is an ultra wideband signal modulated by a digital pulse interval modulation.

**5.** Method according to Claim 2, 3 or 4, in which the correlation mask comprises $M_m$ mask samples, the first processing (31) comprises an initial processing (300) for sampling the signal delivering successive blocks of N samples in parallel and a storage processing (301) performing successive storings of the $M_m$-1 last samples of said blocks, each current group of samples comprising the $M_m$-1 stored samples of the previous block, which are followed by the N samples of the current block.

**6.** Method according to Claim 5, in which the elementary correlation processing (3100) comprises N correlations in parallel performed on each group of N+$M_m$-1 samples with said correlation mask and delivering for each group of samples a block of N initial correlation values.

**7.** Device for processing a signal, comprising an input (EN) for receiving said signal (rx), first processing means (CAN) coupled to said input and able to deliver a sampled signal (7), correlation processing means coupled to the output of the first processing means and able to deliver correlation values, **characterized in that** it comprises memory means (MM) storing several correlation signals corresponding respectively to at least part of several sampled waveforms of the signal respectively emitted at several distances of different values so that the sum of the maxima of intercorrelations respectively performed between the various correlation signals and the various sampled waveforms is substantially constant over an interval including all the values of said distances, and the correlation processing means comprise several elementary processing means able to respectively perform elementary correlation processings with said correlation signals and to each deliver initial correlation values, as well as summation means (SOM) connected to the outputs of the elementary processing means and able to deliver said correlation values (R).

8. Device according to Claim 7, in which the signal is a pulse signal, the shape of the pulses of the signal varying according to the distance (DD) at which said signal was emitted, in which the correlation signals are correlation masks corresponding respectively to at least part of several sampled pulses of the signal respectively emitted at several distances of different values are moreover defined so that the sum of the maxima of intercorrelations performed respectively between the various correlation masks and the various shapes of sampled pulses is substantially constant over said interval.

9. Device according to Claim 8, in which the signal is a modulated ultra wideband signal, in which the first processing means (CAN) are able to deliver successive groups of samples (Z) of the signal in parallel, each elementary processing means is able to perform the elementary correlation processing on the successive groups of samples and deliver successive blocks of initial correlation values.

10. Device according to Claim 9, in which the signal is an ultra wideband signal modulated by a digital pulse interval modulation.

11. Device according to Claim 8, 9 or 10, in which each correlation mask comprises $M_m$ mask samples, the first processing means comprise sampling means (MECH) delivering successive blocks of N samples in parallel, a memory (MEM) able to successively store the $M_m$-1 last samples of said blocks, each current group of samples able to be delivered by the first processing means comprising the $M_m$-1 stored samples of the previous block, which are followed by the N samples of the current block.

12. Device according to Claim 11, in which each elementary processing means (CORR) is able to perform N correlations in parallel on each group of $N+M_{m-1}$ samples with the corresponding correlation mask and to deliver for each group of samples a block of N initial correlation values.

13. Device according to one of Claims 7 to 12, comprising a signal processor (DSP) incorporating the correlation processing means.

14. Receiver, comprising a device according to one of Claims 7 to 13.

**Patentansprüche**

1. Verfahren zum Verarbeiten eines Signals, das das Empfangen des Signals, eine erste Verarbeitung an dem Signal, die ein abgetastetes Signal ergibt, und eine Korrelationsverarbeitung an dem abgetasteten Signal, die Korrelationswerte ergibt, enthält, **dadurch gekennzeichnet, dass**, da die Wellenform des Signals entsprechend dem Abstand (DD), in dem das Signal ausgesendet worden ist, variiert, mehrere Korrelationssignale definiert werden, die jeweils wenigstens einem Teil mehrerer abgetasteter Wellenformen des Signals, die jeweils in mehreren Abständen mit unterschiedlichen Werten ausgesendet werden, entsprechen, derart, dass die Summe der Maxima von Interkorrelationen, die jeweils zwischen den verschiedenen Korrelationssignalen und den verschiedenen abgetasteten Wellenformen gebildet werden, in einem Intervall, das alle Werte der Abstände enthält, im Wesentlichen konstant ist, und dass die Korrelationsverarbeitung mehrere elementare Korrelationsverarbeitungen (3101, 3102), die jeweils mit den Korrelationssignalen ($M_m$1, $M_m$2) ausgeführt werden und jeweils Anfangskorrelationswerte ergeben, und eine Summation (3103) der homologen Anfangskorrelationswerte, die sich aus den elementaren Korrelationsverarbeitungen ergeben, enthält, derart, dass die Korrelationswerte (R) erhalten werden.

2. Verfahren nach Anspruch 1, wobei das Signal ein Impulssignal ist, wobei die Form der Impulse des Signals entsprechend dem Abstand (DD), mit dem das Signal ausgesendet worden ist, variiert, wobei die Korrelationssignale Korrelationsmasken sind, die jeweils wenigstens einem Teil mehrerer abgetasteter Impulse des Signals, die jeweils in mehreren Abständen mit unterschiedlichen Werten ausgesendet werden, entsprechen, derart, dass die Summe der Maxima von Interkorrelationen, die jeweils zwischen den verschiedenen Korrelationsmasken und den verschiedenen Formen abgetasteter Impulse gebildet werden, in dem Intervall im Wesentlichen konstant ist.

3. Verfahren nach Anspruch 2, wobei das Signal ein moduliertes Signal mit ultrabreitem Band ist und die erste Verarbeitung aufeinander folgende Gruppen von Abtastwerten (Z) des Signals auf parallele Weise ergibt und jede elementare Korrelationsverarbeitung an den aufeinander folgenden Gruppen von Abtastwerten ausgeführt wird und aufeinander folgende Blöcke von Anfangskorrelationswerten ergibt.

4. Verfahren nach Anspruch 3, wobei das Signal ein Signal mit ultrabreitem Band ist, das durch eine digitale Modulation durch Impulsintervalle moduliert wird.

5. Verfahren nach Anspruch 2, 3 oder 4, wobei jede Korrelationsmaske $M_m$ Maskenabtastwerte enthält, die erste Verarbeitung (31) eine anfängliche Abtastverarbeitung (300) des Signals enthält und aufeinander folgende Blöcke von N Abtastwerten auf parallele Weise ergibt und eine Speicherverarbeitung (301) aufeinander folgende Speicherungen der $M_m$-1 letzten Abtastwerte der Blöcke ausführt, wobei jede momentane Gruppe von Abtastwerten die $M_m$-1 gespeicherten Abtastwerte des vorhergehenden Blocks, gefolgt von N Abtastwerten des momentanen Blocks, enthält.

6. Verfahren nach Anspruch 5, wobei die elementare Korrelationsverarbeitung (3100) parallel N Korrelationen, die an jeder Gruppe aus N+$M_m$-1 Abtastwerten mit der Korrelationsmaske ausgeführt werden, enthält und für jede Gruppe von Abtastwerten einen Block aus N Anfangskorrelationswerten ergibt.

7. Vorrichtung zum Verarbeiten eines Signals, die einen Eingang (EN), um das Signal (rx) zu empfangen, erste Verarbeitungsmittel (CAN), die mit dem Eingang gekoppelt sind und ein abgetastetes Signal (7) liefern können, und Korrelationsverarbeitungsmittel, die mit dem Ausgang der ersten Verarbeitungsmittel gekoppelt sind und Korrelationswerte liefern können, enthält, **dadurch gekennzeichnet, dass** sie Speichermittel (MM) enthält, die mehrere Korrelationssignale speichern, die jeweils wenigstens einem Teil mehrerer abgetasteter Wellenformen des Signals entsprechen, die in mehreren Abständen mit unterschiedlichen Werten ausgesendet werden, derart, dass die Summe der Maxima von Interkorrelationen, die jeweils zwischen den verschiedenen Korrelationssignalen und den verschiedenen abgetasteten Wellenformen ausgeführt werden, in einem Intervall, das alle Werte der Abstände enthält, im Wesentlichen konstant ist, und die Korrelationsverarbeitungsmittel mehrere elementare Verarbeitungsmittel, die jeweils elementare Korrelationsverarbeitungen an den Korrelationssignalen ausführen können und jeden der Anfangskorrelationswerte liefern können, und Summationsmittel (SOM), die mit den Ausgängen der elementaren Verarbeitungsmittel verbunden sind und die Korrelationswerte (R) liefern können, enthalten.

8. Vorrichtung nach Anspruch 7, wobei das Signal ein Impulssignal ist, wobei die Form der Impulse des Signals entsprechend dem Abstand (DD), in dem das Signal ausgesendet worden ist, variiert, wobei die Korrelationssignale Korrelationsmasken sind, die jeweils wenigstens einem Teil mehrerer abgetasteter Impulse des Signals entsprechen, die jeweils in mehreren Abständen mit unterschiedlichen Werten ausgesendet werden, derart, dass die Summe der Maxima von Interkorrelationen, die jeweils zwischen den verschiedenen Korrelationsmasken und den verschiedenen Formen abgetasteter Impulse ausgeführt werden, in dem Intervall im Wesentlichen konstant ist.

9. Vorrichtung nach Anspruch 8, wobei das Signal ein moduliertes Signal mit ultrabreitem Band ist, wobei die ersten Verarbeitungsmittel (CAN) aufeinander folgende Gruppen von Abtastwerten (Z) des Signals parallel liefern können, wobei jedes elementare Verarbeitungsmittel die elementare Korrelationsverarbeitung an den aufeinander folgenden Gruppen von Abtastwerten ausführen kann und aufeinander folgende Blöcke von Anfangskorrelationswerten liefern kann.

10. Vorrichtung nach Anspruch 9, wobei das Signal ein Signal mit ultrabreitem Band ist, das durch eine digitale Modulation durch Impulsintervalle moduliert wird.

11. Vorrichtung nach Anspruch 8, 9 oder 10, wobei jede Korrelationsmaske ($M_m$) Maskenabtastwerte enthält, die ersten Verarbeitungsmittel Abtastmittel (MECH), die aufeinander folgende Blöcke aus N Abtastwerten parallel liefern, und einen Speicher (MEM), der nacheinander die $M_m$-1 letzten Abtastwerte der Blöcke speichern kann, enthalten, wobei jede momentane Gruppe von Abtastwerten, die von den ersten Verarbeitungsmitteln geliefert werden kann, die gespeicherten $M_m$-1 Abtastwerte des vorhergehenden Blocks, gefolgt von N Abtastwerten des momentanen Blocks, enthält.

12. Vorrichtung nach Anspruch 11, wobei jedes elementare Verarbeitungsmittel (CORR) N Korrelationen parallel an jeder Gruppe aus N+$M_m$-1 Abtastwerten mit der entsprechenden Korrelationsmaske ausführen kann und für jede Gruppe von Abtastwerten einen Block aus N Anfangskorrelationswerten liefern kann.

13. Vorrichtung nach einem der Ansprüche 7 bis 12, die einen Signalverarbeitungsprozessor (DSP) enthält, der die Korrelationsverarbeitungsmittel enthält.

14. Empfänger, der eine Vorrichtung nach einem der Ansprüche 7 bis 13 enthält.

# FIG.1

# FIG.2

# FIG.3

Signal modulé — rx

↓

Premier traitement — 30

↓

Signal échantillonné — Z

↓

Deuxième traitement — 31

↓

Deuxièmes informations — O

↓

Troisième traitement — 32

↓

Impulsions — P

# FIG.4

EP 2 012 438 B1

# FIG.5

## FIG.6

## FIG.7

Impulsion sur
zone de troncature

# FIG.8

N échantillons de 2 bits

# FIG.9

# FIG.10

# FIG.11

MT2

MT3

Z[M-1:M-31]

C
O
R
R

R[M-30]

O[M-30]

Z[i+30:i]

C
O
R
R

R[i]

O[i]

Mx2

Z

C
O
R
R

R[0]

O[0]

Z[30:0]

CLK

Masque M$_m$

# FIG.14

DD: distance entre émetteur et récepteur (cm)

# FIG.12

# FIG.13

**EP 2 012 438 B1**

**RÉFÉRENCES CITÉES DANS LA DESCRIPTION**

**Documents brevets cités dans la description**

- US 20040042561 A1
- EP 0843418 A